(19) Europäisches Patentamt
European Patent Office
Office européen des brevets

(11) Veröffentlichungsnummer: **0 273 867 B1**

# (12) EUROPÄISCHE PATENTSCHRIFT

(45) Veröffentlichungstag der Patentschrift: **26.08.92**

(51) Int. Cl.$^5$: **C04B 41/49**, C04B 41/64, C08L 83/04, C09D 4/00

(21) Anmeldenummer: **87810775.4**

(22) Anmeldetag: **22.12.87**

## (54) Mittel zur Verbesserung der hydrophoben Eigenschaften von anorganischen Materialien.

(30) Priorität: **02.01.87 CH 1/87**

(43) Veröffentlichungstag der Anmeldung:
**06.07.88 Patentblatt 88/27**

(45) Bekanntmachung des Hinweises auf die Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
**EP-A- 0 075 962**
**EP-A- 0 101 816**
**EP-A- 0 124 748**
**DE-C- 2 029 446**

(73) Patentinhaber: **Richard Kaufmann & Co.**
**Ramsteinerstrasse 20**
**CH-4002 Basel(CH)**

(72) Erfinder: **Sütterlin, Alfons**
**Obere Schanzstrasse 9**
**W-7858 Weil am Rhein(DE)**

(74) Vertreter: **Becher, Pauline, Dr. et al**
**A. Braun, Braun, Héritier, Eschmann AG Patentanwälte Holbeinstrasse 36-38**
**CH-4051 Basel(CH)**

EP 0 273 867 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Mittel zur Verbesserung der hydrophoben Eigenschaften von anorganischen Materialien, insbesondere von Mauerwerk, Beton und Fassadenaussenputz, auf Basis von Alkyltrialkoxysilanen oder deren Ankondensationsprodukten.

Die DE-PS 20 29 446 bezieht sich auf ein Verfahren zum Imprägnieren von Mauerwerk, Beton und Fassadenaussenputz mittels $C_1$- bis $C_6$-Alkyltrialkoxysilanen oder deren Ankondensationsprodukten, die als 20- bis 80-gewichtsprozentige Lösungen in $C_1$- bis $C_3$-Alkanolen, vorzugsweise Ethanol, aufgebracht werden. Unter $C_1$- bis $C_6$-Alkyltrialkoxysilanen versteht man bekanntlich Methyl-, Ethyl-, Propyl-. Butyl-, Pentyl- und Hexyltrialkoxysilane. Als Imprägnierungsunterlagen kommen zement, und kalkhaltige Stoffe, die hydroxylgruppenhaltige Anteile besitzen, an denen die Si-O-Bindungen abbinden können, in Betracht.

Aufgabe der vorliegenden Erfindung ist es, Mittel zur Verbesserung der hydrophoben Eigenschaften von anorganischen Materialien zur Verfügung zu stellen, mit denen ein erheblich besserer Abperleffekt und eine grössere Reduktion der von der anorganischen Materialien aufgenommenen Wassermenge als mit dem Verfahren nach der DE-PS 20 29 446 erreicht werden kann.

Gegenstand der vorliegenden Erfindung ist ein Mittel zur Verbesserung der hydrophoben Eigenschaften von anorganischen Materialien auf Basis von Alkyltrialkoxysilanen oder deren Ankondensationsprodukten, das dadurch gekennzeichnet ist, dass es enthält:

a) mindestens ein Alkyltrialkoxysilan mit 8 bis 18 Kohlenstoffatomen im Alkylrest und je 1 bis 3 Kohlenstoffatomen in den Alkoxyresten oder Ankondensationsprodukte davon, die im Durchschnitt noch 0 bis 2 Alkoxyreste pro Siliciumatom enthalten, zusammen mit mindestens einer weiteren Komponente, die gewählt ist aus:

b) einem Alkohol oder einem Kohlenwasserstoff oder Kohlenwasserstoffgemisch als Lösungsmittel und

c) mindestens einem Alkyltrialkoxysilan mit 1 bis 7 Kohlenstoffatomen im Alkylrest und je 1 bis 3 Kohlenstoffatomen in den Alkoxyresten oder Ankondensationsprodukten davon, die im Durchschnitt noch 0 bis 2 Alkoxyreste pro Siliciumatom enthalten.

Vorzugsweise enthalten die Alkylreste der Komponente a) 10 bis 12 Kohlenstoffatome.

Vorzugsweise enthält das Mittel 1 bis 30 Gew.-%, insbesondere 1 bis 15 Gew.-%, Alkyltrialkoxysilan(e) mit 8 bis 18 Kohlenstoffatomen im Alkylrest oder dessen bzw. deren Ankondensationsprodukt(e) und 0 bis 99 Gew.-% Alkyltrialkoxysilan(e) mit 1 bis 7 Kohlenstoffatomen im Alkylrest oder dessen bzw. deren Ankondensationsprodukt(e) sowie 0 bis 95 Gew.-% Alkohol oder Kohlenwasserstoff oder Kohlenwasserstoffgemisch.

Als Lösungsmittel kommen, wie gesagt, Alkohole oder auch Kohlenwasserstoffe oder Kohlenwasserstoffgemische in Frage. Als Alkohole werden Alkanole mit 1 bis 3 Kohlenstoffatomen, insbesondere Ethanol, bevorzugt. Bevorzugte Kohlenwasserstoffe sind Alkane mit einem Siedepunkt im Bereich von 120 bis 180 °C bei $1x10^5$ Pa absolut, wie n-Octan, n-Nonan, n-Decan und verschiedene Isomere davon, Alkylbenzole, wie Toluol, die isomeren Xylole und die isomeren Trimethylbenzole, sowie Styrol. Geeignete Kohlenwasserstoffgemische sind Gemische mit einem Siedebereich von 155 bis 175 °C bei $1x10^5$ Pa absolut, die zu ca. 99 Gew.-% aus aromatischen Kohlenwasserstoffen mit 9 oder 10 Kohlenstoffatomen bestehen. Ein solches Gemisch ist das Markenprodukt Deasol®99 der Firma Texaco Inc. Andere geeignete Kohlenwasserstoffgemische sind Testbenzin, das Markenprodukt Shellsol®A der Firma Shell und die sogenannten "White Spirits", auch als "Stoddard solvent" bezeichnet, ein Petroleumdestillat mit einem Flammpunkt von ca. 38 bis 43 °C, das die Kohlenwasserstoff $C_{10}H_{22}$ bis $C_{15}H_{32}$ enthält.

Das erfindungsgemässe Mittel enthält vorteilhafterweise ausserdem mindestens einen Hydrolysekatalysator, der vorzugsweise ein Salz aus einem Metall und einer Carbonsäure, eine gemischte metallorganische Verbindung (das heisst, eine Verbindung, in der mindestens ein organischer Rest über ein Kohlenstoffatom direkt an das Metallatom gebunden ist und ausserdem mindestens ein Rest oder ein Ion nicht über ein Kohlenstoffatom an das Metallatom gebunden ist), ein Titansäureester, ein Kieselsäureester, eine Säure oder eine basische organische Stickstoffverbindung sein kann.

Vor allem kommen Verbindungen von Metallen, die in der elektrochemischen Spannungsreihe von Titan bis Blei reichen, in Betracht. Die Katalysatoren können beispielsweise Salze des Cadmiums, Titans, Zirkoniums, Zinns, Bleis, Mangans, Eisens und Cobalts sein, wie Zinn(II)-octoat, Bleioctoat, Bleilaurat, Eisen-(III)-octoat, Eisen(II)-stearat und Cobaltnaphthenat. Ebenfalls geeignet sind gemischte metallorganische Verbindungen, wie Dibutylzinndilaurat und Dibutylzinndiacetat. Als Titansäureester kommen Tetrapropylorthotitanat, Tetraisopropylorthotitanat und Tetrabutylorthotitanat in Betracht. Auch Kieselsäureester der Formel:

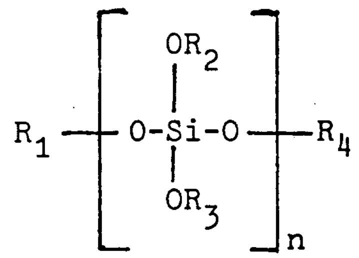

worin $R_1$, $R_2$, $R_3$ und $R_4$ gleiche oder verschiedene gesättigte oder ungesättigte aliphatische oder cycloaliphatische Reste, Arylreste oder Aralkylreste bedeuten und n einen Wert von 1 bis 10 hat, kommen in Frage. Schliesslich können auch Chlorwasserstoff als Säure und Monoethanolamin, Triethanolamin und Piperidin als basische organische Stickstoffverbindungen verwendet werden.

Die erfindungsgemässen Mittel enthalten vorzugsweise 0,01 bis 10 Gew.-% Katalysator(en), bezogen auf das Gewicht des Alkyltrialkoxysilans bzw. der Alkyltrialkoxysilane oder der Ankondensationsprodukte davon, insbesondere 0,1 bis 5 Gew.-% Katalysator(en), bezogen auf das Gewicht des Alkyltrialkoxysilans bzw. der Alkyltrialkoxysilane oder der Ankondensationsprodukte davon.

Die im erfindungsgemässen Mittel enthaltenen Alkyltrialkoxysilane können nach bekannten Verfahren hergestellt werden, und zwar durch Veresterung der entsprechenden Chlorsilane der Formel $R\text{-}SiCl_3$, worin R ein Alkylrest mit 8 bis 18 bzw. 1 bis 7 Kohlenstoffatomen ist, mit Methanol, Ethanol oder Propanol. Die Ankondensationsprodukte können aus den Alkyltrialkoxysilanen durch Umsetzung mit Wasser und gegebenenfalls Abdestillieren des freigesetzten Methanols, Ethanols oder Propanols erhalten werden.

Die erfindungsgemässen Mittel können zur Verbesserung der hydrophoben Eigenschaften der verschiedensten anorganischen Materialien, wie Beton und andere Kunststeine, Naturseine, Ziegel, lose Sande und pulverförmige oder feste anorganische Oxide, verwendet werden. Die Hydrolyse der in alkoholischer oder Kohlenwasserstofflösung aufgebrachten Alkyltrialkoxysilane erfolgt dabei auf dem behandelten Material von selbst.

Die erfindungsgemässen Mittel können durch Sprühen oder Fluten auf die zu behandelnden anorganischen Materialien aufgebracht werden. Vom Streichen mittels Pinsel oder Roller ist abzuraten, da derartige Applikationsverfahren bei festen Materialien geringere Eindringtiefen ergeben als das Sprühen oder Fluten. Lose Sande und pulverförmige anorganische Oxide werden vorzugsweise in die erfindungsgemässen Mittel eingetaucht.

Die volle wasserabweisende Wirkung tritt ca. 24 Stunden nach der Behandlung ein.

Die Erfindung wird durch die folgenden Beispiele erläutert. Sie ist aber nicht auf die darin beschriebenen Ausführungsformen beschränkt. Die Beispiele zeigen die Vorteile der erfindungsgemässen Mittel gegenüber den in der DE-PS Nr. 20 29 446 verwendeten Lösungen.

Probekörper von 15 x 15 x 5 cm aus Ruffacher Sandstein und rotem Vogesensandstein wurden mit den erfindungsgemässen Mitteln behandelt, wobei 1 Liter des verwendeten Mittels pro $m^2$ Oberfläche verwendet wurden. Nach einer Reaktionszeit von 24 Stunden wurde die Wasseraufnahme in $g/m^2$ Oberfläche in Bädern mit einem Wasserstand von 10 cm Höhe innerhalb von 30 Minuten durch Wägen bestimmt.

In den Beispielen bedeuten:

| | |
|---|---|
| C3 | n-Propyltrimethoxysilan |
| C4 | Isobutyltrimethoxysilan |
| C8 | n-Octyltrimethoxysilan |
| C10 | n-Decyltrimethoxysilan |
| C12 | n-Dodecyltrimethoxysilan |
| C14 | n-Tetradecyltrimethoxysilan |
| C16 | n-Hexadecyltrimethoxysilan |

Beispiel 1

Hydrophobierung von Rouffacher Sandstein

| Gehalt des Mittels an Alkyltrialkoxysilan | Lösungsmittel | Verwendete Menge des Mittels (Liter/$m^2$) | Wasseraufnahme ($g/m^2$ in 30 Minuten) |
|---|---|---|---|
| 40 Gew.-% C3 | Ethanol | 1 | 58 |
| 40 Gew.-% C4 | " | 1 | 57 |
| 10 Gew.-% C10 | " | 1 | 8 |
| 10 Gew.-% C12 | " | 1 | 8 |
| 40 Gew.-% C3 + 5 Gew.-% C10 | " | 1 | 9 |
| 40 Gew.-% C4 + 5 Gew.-% C12 | " | 1 | 8 |
| 20 Gew.-% C3 + 5 Gew.-% C10 | " | 1 | 8 |
| 20 Gew.-% C4 + 5 Gew.-% C12 | " | 1 | 8 |
| unbehandelter Rouffacher Sandstein | | - | 2235 |

## Beispiel 2

### Hydrophobierung von rotem Vogesensandstein

| Gehalt des Mittels an Alkyltrialkoxysilan | Lösungsmittel | Verwendete Menge des Mittels (Liter/$m^2$) | Wasseraufnahme ($g/m^2$ in 30 Minuten) |
|---|---|---|---|
| 40 Gew.-% C3 | Ethanol | 1 | 85 |
| 40 Gew.-% C4 | " | 1 | 72 |
| 10 Gew.-% C10 | " | 1 | 9 |
| 10 Gew.-% C12 | " | 1 | 8 |
| 40 Gew.-% C3 + 5 Gew.-% C10 | " | | 9 |
| 40 Gew.-% C4 + 5 Gew.-% C12 | " | 1 | 8 |
| 20 Gew.-% C3 + 5 Gew.-% C10 | " | 1 | 9 |
| 20 Gew.-% C4 + 5 Gew.-% C12 | " | 1 | 8 |
| unbehandelter Vogesensandstein | | - | 1850 |

Beispiel 3

Hydrophobierung von rotem Vogesensandstein

| Gehalt des Mittels an Alkyltrialkoxysilan | Lösungsmittel | Verwendete Menge des Mittels (Liter/$m^2$) | Wasseraufnahme ($g/m^2$ in 30 Minuten) |
|---|---|---|---|
| 40 Gew.-% C3 | White Spirits | 1 | 72 |
| 40 Gew.-% C4 | Deasol® 99 | 1 | 82 |
| 40 Gew.-% C4 | Shellsol® A | 1 | 80 |
| 40 Gew.-% C3 | Testbenzin | 1 | 75 |
| 40 Gew.-% C3 + 5 Gew.-% C10 | White Spirits | 1 | 9 |
| 40 Gew.-% C4 + 5 Gew.-% C12 | " " | 1 | 8 |
| 40 Gew.-% C3 + 5 Gew.-% C14 | " " | 1 | 10 |
| 40 Gew.-% C3 + 5 Gew.-% C16 | " " | 1 | 8 |
| 40 Gew.-% C4 + 5 Gew.-% C8 | " " | 1 | 8 |
| 40 Gew.-% C3 + 5 Gew.-% C10 | Shellsol® A | 1 | 10 |
| 40 Gew.-% C3 + 5 Gew.-% C12 | Deasol® 99 | 1 | 10 |
| 40 Gew.-% C3 + 5 Gew.-% C8 | " " | 1 | 9 |
| 20 Gew.-% C3 + 5 Gew.-% C8 | " " | 1 | 10 |
| 20 Gew.-% C3 + 5 Gew.-% C10 | White Spirits | 1 | 9 |
| 20 Gew.-% C3 + 5 Gew.-% C12 | " " | 1 | 8 |
| 20 Gew.-% C3 + 5 Gew.-% C14 | " " | 1 | 10 |
| 20 Gew.-% C3 + 5 Gew.-% C16 | " " | 1 | 9 |
| 20 Gew.-% C3 + 5 Gew.-% C8 | Ethanol | 1 | 9 |
| 20 Gew.-% C3 + 5 Gew.-% C10 | " | 1 | 9 |
| 20 Gew.-% C3 + 5 Gew.-% C12 | " | 1 | 8 |
| 20 Gew.-% C3 + 5 Gew.-% C14 | " | 1 | 10 |
| 20 Gew.-% C3 + 5 Gew.-% C16 | " | 1 | 10 |
| unbehandelter roter Vogesensandstein | | - | 2650 |

Die Beispiele 1 bis 3 zeigen, dass mit den erfindungsgemässen Mitteln wesentlich bessere Wasserreduktionswerte erhalten werden als mit den in der DE-PS Nr. 20 29 446 verwendeten Lösungen. Aehnliche Ergebnisse werden auch mit erfindungsgemässen Mitteln erhalten, die Alkyltrialkoxysilane erhalten, deren Alkylreste 1, 2, 5, 6, 7 bzw. 9, 11, 13, 15, 17 oder 18 Kohlenstoffatome aufweisen.

Im einzelnen wurde gefunden, dass bei den mit C10 und C12 behandelten Steinen eine um ungefähr eine Zehnerpotenz geringere Wasseraufnahme eintritt als bei den mit C3 und C4 behandelten Steinen, obwohl die verwendete Menge C10 bzw. C12 nur ein Viertel der verwendeten Menge von C3 bzw. C4 betrug. Ferner kann die Menge an C3 bzw. C4 auf die Hälfte herabgesetzt werden, wenn man C10 oder C12 (ein Achtel der ursprünglichen Menge an C3 bzw. C4) zusetzt, ohne dass die Wasseraufnahme zunimmt.

Vergleichsversuche mit in Kohlenwasserstoffen oder Kohlenwasserstoffgemischen gelösten Alkyltrialkoxysilanen ergaben vergleichbare Resultate wie entsprechende ethanolische Lösungen.

Bei alleiniger Verwendung von Alkyltrialkoxysilanen mit 1 bis 7 Kohlenstoffatomen in Alkylrest wird ein ungenügendes Abperlen von Wasser von der Oberfläche des behandelten anorganischen Materials beobachtet. Es hat sich nun gezeigt, dass dieser Nachteile nicht auftritt, wenn man Alkyltrialkoxysilane mit 8 bis 18 Kohlenstoffatomen im Alkylrest oder deren Gemische mit Alkyltrialkoxysilanen mit 1 bis 7 Kohlenstoffatomen im Alkylrest verwendet.

Bei Durchführung eines Salzsprengtests nach der deutschen Norm DIN 52 111 zeigen mit C10 bzw. C12 behandelte Proben eine acht- bis zwanzigmal bessere Beständigkeit als mit C3 bzw. C4 behandelte Proben. Bei Betonprobekörpern, die nach der Schweizer Norm SIA 215 hergestellt und mit C10 bzw. C12 behandelt wurden, war die Beständigkeit gegen NaOH zehn- bis fünfzigmal besser als bei Proben, die mit C3 bzw. C4 behandelt wurde.

Mit Ankondensationsprodukten der Alkyltrialkoxysilane, die im Durchschnitt noch 0 bis 2 Alkoxyreste pro Siliciumatom enthalten, werden ähnliche Eigenschaften erzielt wie mit den Alkyltrialkoxysilanen selbst.

Die Wirkung der erfindungsgemässen Mittel kann durch Zusatz von Kondensationskatalysatoren, beispielsweise der oben genannten, weiter verbessert werden. Die optimale Zusammensetzung der erfindungsgemässen Mittel für die Behandlung jedes einzelnen anorganischen Materials kann vom Fachmann durch Vorversuche ermittelt werden.

**Patentansprüche**

1. Mittel zur Verbesserung der hydrophoben Eigenschaften von anorganischen Materialien auf Basis von Alkyltrialkoxysilanen oder deren Ankondensationsprodukten, dadurch gekennzeichnet, dass es enthält:
   a) mindestens ein Alkyltrialkoxysilan mit 8 bis 18 Kohlenstoffatomen im Alkylrest und je 1 bis 3 Kohlenstoffatomen in den Alkoxyresten oder Ankondensationsprodukte davon, die im Durchschnitt noch 0 bis 2 Alkoxyreste pro Siliciumatom enthalten, zusammen mit mindestens einer weiteren Komponente, die gewählt ist aus:
   b) einem Alkohol oder einem Kohlenwasserstoff oder Kohlenwasserstoffgemisch als Lösungsmittel und
   c) mindestens einem Alkyltrialkoxysilan mit 1 bis 7 Kohlenstoffatomen im Alkylrest und je 1 bis 3 Kohlenstoffatomen in den Alkoxyresten oder Ankondensationsprodukten davon, die im Durchschnitt noch 0 bis 2 Alkoxyreste pro Siliciumatom enthalten.

2. Mittel nach Anspruch 1, dadurch gekennzeichnet, dass die Alkylreste der Komponente a) 10 bis 12 Kohlenstoffatome enthalten.

3. Mittel nach Anspruch 1 oder 2, dadurch gekennzeichnet, dass das Mittel 1 bis 30 Gew.-% Alkyltrialkoxysilan(e) mit 8 bis 18 Kohlenstoffatomen im Alkylrest oder dessen bzw. deren Ankondensationsprodukt(e) und 0 bis 99 Gew.-% Alkyltrialkoxysilan(e) mit 1 bis 7 Kohlenstoffatomen im Alkylrest oder dessen bzw. deren Ankondensationsprodukt(e) sowie 0 bis 95 Gew.-% Alkohol oder Kohlenwasserstoff oder Kohlenwasserstoffgemisch enthält.

4. Mittel nach Anspruch 3, dadurch gekennzeichnet, dass es 1 bis 15 Gew.-% Alkyltrialkoxysilan(e) mit 8 bis 18 Kohlenstoffatomen im Alkylrest oder dessen bzw. deren Ankondensationsprodukt(e) enthält.

5. Mittel nach einem der Ansprüche 1 bis 4, dadurch gekennzeichnet, dass der Alkohol Ethanol ist.

6. Mittel nach einem der Ansprüche 1 bis 4, dadurch gekennzeichnet, dass der Kohlenwasserstoff ein Alkan mit einem Siedepunkt im Bereich von 120 bis 180 °C bei $1 \times 10^5$ Pa absolut, Toluol, ein Xylol, ein Trimethylbenzol oder Styrol ist.

7. Mittel nach einem der Ansprüche 1 bis 4, dadurch gekennzeichnet, dass das Kohlenwasserstoffgemisch ein Gemisch mit einem Siedebereich von 155 bis 175 °C bei $1 \times 10^5$ Pa absolut ist, das zu ca. 99 Gew.-% aus aromatischen Kohlenwasserstoffen mit 9 oder 10 Kohlenstoffatomen besteht.

8. Mittel nach einem der Ansprüche 1 bis 7, dadurch gekennzeichnet, dass es mindestens einen Hydrolysekatalysator enthält.

9. Mittel nach Anspruch 8, dadurch gekennzeichnet, dass der Katalysator ein Salz aus einem Metall und einer Carbonsäure, eine gemischte metallorganische Verbindung, ein Titansäureester, ein Kieselsäureester, eine Säure oder eine basische organische Stickstoffverbindung ist.

**10.** Mittel nach Anspruch 9, dadurch gekennzeichnet, dass der Katalysator Zinn(II)-octoat, Bleioctoat, Bleilaurat, Eisen(III)-octoat, Eisen(II)-stearat, Cobaltnaphthenat, Dibutylzinndilaurat, Dibutylzinndiacetat, Tetrapropylorthotitanat, Tetraisopropylorthotitanat, Tetrabutylorthotitanat, ein Kieselsäureester der Formel:

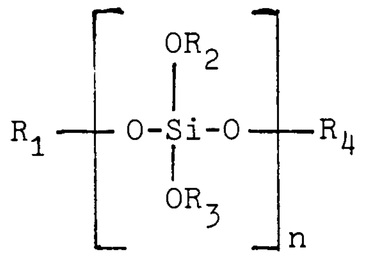

worin $R_1$, $R_2$, $R_3$ und $R_4$ gleiche oder verschiedene gesättigte oder ungesättigte aliphatische oder cycloaliphatische Reste, Arylreste oder Aralkylreste bedeuten und n einen Wert von 1 bis 10 hat, Chlorwasserstoff, Monoethanolamin, Triethanolamin oder Piperidin ist.

**11.** Mittel nach einem der Ansprüche 8 bis 10, dadurch gekennzeichnet, dass es 0,01 bis 10 Gew.-% Katalysator(en), bezogen auf das Gewicht des Alkyltrialkoxysilans bzw. der Alkyltrialkoxysilane oder der Ankondensationsprodukte davon, enthält.

**12.** Mittel nach Anspruch 11, dadurch gekennzeichnet, dass es 0,1 bis 5 Gew.-% Katalysator(en), bezogen auf das Gewicht des Alkyltrialkoxysilans bzw. der Alkyltrialkoxysilane oder der Ankondensationsprodukte davon, enthält.

## Claims

**1.** An agent for improving the hydrophobic properties of inorganic materials, based on alkyl trialkoxysilanes or partial condensation products thereof, characterized in that it contains:
a) at least one alkyl trialkoxysilane with 8 to 18 carbon atoms in the alkyl radical and 1 to 3 carbon atoms in each of the alkoxy radicals, or partial condensation products thereof, which, on the average, still contain 0 to 2 alkoxy radicals per silicon atom, together with at least one other component selected from:
b) an alcohol or a hydrocarbon or hydrocarbon mixture as solvent, and
c) at least one alkyl trialkoxysilane with 1 to 7 carbon atoms in the alkyl radical and 1 to 3 carbon atoms in each of the alkoxy radicals, or partial condensation products thereof, which, on the average, still contain 0 to 2 alkoxy radicals per silicon atom.

**2.** The agent according to claim 1, characterized in that the alkyl radicals of component a) contain 10 to 12 carbon atoms.

**3.** The agent according to claim 1 or 2, characterized in that the agent contains 1 to 30 weight % alkyl trialkoxysilane(s) with 8 to 18 carbon atoms in the alkyl radical, or partial condensation product(s) thereof and 0 to 99 weight % alkyl trialkoxysilane(s) with 1 to 7 carbon atoms in the alkyl radical, or partial condensation product(s) thereof, as well as 0 to 95 weight % alcohol or hydrocarbon or hydrocarbon mixture.

**4.** The agent according to claim 3, characterized in that it contains 1 to 15 weight % alkyl trialkoxysilane(s) with 8 to 18 carbon atoms in the alkyl radical, or partial condensation product(s) thereof.

**5.** The agent according to any one of claims 1 to 4, characterized in that the alcohol is ethanol.

**6.** The agent according to any one of claims 1 to 4, characterized in that the hydrocarbon is an alkane

with a boiling point in the range of 120 to 180°C at 1 x $10^5$ Pa absolute, toluene, a xylene, a trimethylbenzene or styrene.

**7.** The agent according to any one of claims 1 to 4, characterized in that the hydrocarbon mixture is a mixture with a boiling range of 155 to 175°C at 1 x 10 $Pa^5$ absolute, which contains about 99 weight % of aromatic hydrocarbons with 9 or 10 carbon atoms.

**8.** The agent according to any one of claims 1 to 7, characterized in that it contains at least one hydrolysis catalyst.

**9.** The agent according to claim 8, characterized in that the catalyst is a salt of a metal and a carboxylic acid, a mixed metallo-organic compound, a titanic acid ester, a silicic acid ester, an acid, or a basic organic nitrogen compound.

**10.** The agent according to claim 9, characterized in that the catalyst is tin(II) octoate, lead octoate, lead laurate, iron(III) octoate, iron(II) stearate, cobalt naphthenate, dibutyltin dilaurate, dibutyltin diacetate, tetrapropyl orthotitanate, tetraisopropyl orthotitanate, tetrabutyl orthotitanate, a silicic acid ester of the formula:

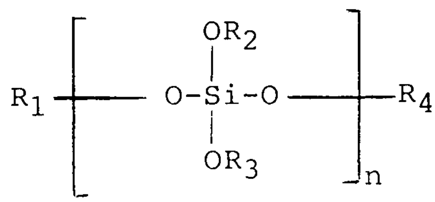

wherein $R_1$, $R_2$, $R_3$ and $R_4$ are identical or different saturated or unsaturated aliphatic or cycloaliphatic radicals, aryl radicals, or aralkyl radicals and n has a value of 1 to 10, hydrogen chloride, monoethanolamine, triethanolamine, or piperidine.

**11.** The agent according to any one of claims 8 to 10, characterized in that it contains 0.01 to 10 weight % catalyst(s), based on the weight of the alkyl trialkoxysilane or alkyl trialkoxysilanes or partial condensation products thereof.

**12.** The agent according to claim 11, characterized in that it contains 0.1 to 5 weight % catalyst(s), based on the weight of the alkyl trialkoxysilane or alkyl trialkoxysilanes or partial condensation products thereof.

## Revendications

**1.** Agent pour améliorer les propriétés hydrophobes de matériaux inorganiques, à base d'alcoyltrialcoxysilanes ou de leurs produits de condensation, caractérisé en ce qu'il contient :

a) au moins un alcoyltrialcoxysilane de 8 à 18 atomes de carbone dans le radical alcoyle et de 1 à 3 atomes de carbone dans chacun des radicaux alcoxy ou des produits de condensation de celui-ci, qui contiennent en moyenne encore 0 à 2 radicaux alcoxy par atome de silicium, conjointement avec au moins un composant supplémentaire qui est choisi entre :

b) un alcool ou un hydrocarbure ou mélange d'hydrocarbures comme solvant, et

c) au moins un alcoyltrialcoxysilane de 1 à 7 atomes de carbone dans le radical alcoyle et de 1 à 3 atomes de carbone dans chacun des radicaux alcoxy ou leurs produits de condensation, qui contiennent en moyenne encore 0 à 2 radicaux alcoxy par atome de silicium.

**2.** Agent suivant la revendication 1, caractérisé en ce que les radicaux alcoyle du composant a) contiennent 10 à 12 atomes de carbone.

**3.** Agent suivant la revendication 1 ou 2, caractérisé en ce que l'agent contient 1 à 30% en poids d'alcoyltrialcoxysilane(s) de 8 à 18 atomes de carbone dans le radical alcoyle et de son ou leurs

produit(s) de condensation et 0 à 99% en poids d'alcoyltrialcoxysilane(s) de 1 à 7 atomes de carbone dans le radical alcoyle ou de son ou leurs produit(s) de condensation, ainsi que 0 à 95% en poids d'alcool ou d'hydrocarbure ou mélange d'hydrocarbures.

**4.** Agent suivant la revendication 3, caractérisé en ce qu'il contient 1 à 15% en poids d'alcoyltrialcoxysilane(s), de 8 à 18 atomes de carbone dans le radical alcoyle ou de son ou leurs produit(s) de condensation.

**5.** Agent suivant l'une quelconque des revendications 1 à 4, caractérisé en ce que l'alcool est l'éthanol.

**6.** Agent suivant l'une quelconque des revendications 1 à 4, caractérisé en ce que l'hydrocarbure est un alcane d'un point d'ébullition de l'intervalle de 120 à 180 °C sous 1 x $10^5$ Pa absolu, le toluène, un xylène, un triméthylbenzène ou le styrène.

**7.** Agent suivant l'une quelconque des revendications 1 à 4, caractérisé en ce que le mélange d'hydrocarbures est un mélange d'un intervalle d'ébullition de 155 à 175 °C sous 1 x $10^5$ Pa absolu, qui consiste pour jusqu'à environ 99% en poids en hydrocarbures aromatiques de 9 ou 10 atomes de carbone.

**8.** Agent suivant l'une quelconque des revendications 1 à 7, caractérisé en ce qu'il contient au moins un catalyseur d'hydrolyse.

**9.** Agent suivant la revendication 8, caractérisé en ce que le catalyseur est un sel formé d'un métal et d'un acide carboxylique, un composé organométallique mixte, un ester d'acide titanique, un ester d'acide silicique, un acide ou un composé azoté basique organique.

**10.** Agent suivant la revendication 9, caractérisé en ce que le catalyseur est l'octoate d'étain (II), l'octoate de plomb, le laurate de plomb, l'octoate de fer (III), le stéarate de fer (II), le naphténate de cobalt, le dilaurate de dibutylétain, le diacétate de dibutylétain, l'orthotitanate de tétrapropyle, l'orthotitanate de tétraisopropyle, l'orthotitanate de tétrabutyle, un ester d'acide silicique de formule :

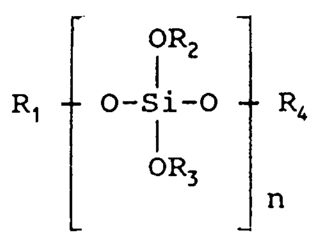

où $R_1$, $R_2$, $R_3$ et $R_4$ représentent des radicaux aliphatiques ou cycloaliphatiques saturés ou insaturés, radicaux aryle ou radicaux aralcoyle identiques ou différents, et n a une valeur de 1 à 10, le chlorure d'hydrogène, la monoéthanolamine, la triéthanolamine ou la pipéridine.

**11.** Agent suivant l'une quelconque des revendications 8 à 10, caractérisé en ce qu'il contient 0,01 à 10% en poids de catalyseur(s), sur la base du poids de l'alcoyltrialcoxysilane ou des alcoyltrialcoxysilanes, ou de leurs produits de condensation.

**12.** Agent suivant la revendication 11, caractérisé en ce qu'il contient 0,1 à 5% en poids de catalyseur(s), sur la base du poids de l'alcoyltrialcoxysilane ou des alcoyltrialcoxysilanes, ou de leurs produits de condensation.